(19) Europäisches Patentamt
European Patent Office
Office européen des brevets

(11) Publication number: **0 104 075**
**A1**

# (12) EUROPEAN PATENT APPLICATION

(21) Application number: 83305496.8

(22) Date of filing: 19.09.83

(51) Int. Cl.³: C 09 C 1/64
C 09 C 3/06

(30) Priority: 20.09.82 US 420446
20.09.82 US 420447

(43) Date of publication of application:
28.03.84 Bulletin 84/13

(84) Designated Contracting States:
DE FR GB IT SE

(71) Applicant: ALUMINUM COMPANY OF AMERICA
Alcoa Building
Pittsburgh Pennsylvania(US)

(72) Inventor: Becker, Aaron J.
1378 Hillsdale Drive
Monroeville Pennsylvania(US)

(72) Inventor: Wang, E. Edward
204 Rush Valley Road
Monroeville Pennsylvania(US)

(72) Inventor: Kondis, Thomas John
842 Stevendale Drive
Pittsburgh Pennsylvania(US)

(74) Representative: Baillie, Iain Cameron et al,
c/o Ladas & Parry Isartorplatz 5
D-8000 München 2(DE)

(54) **Vanadium-stabilized aluminum particles.**

(57) Vanadium-treated aluminum particles are provided, and in particular vanadium-treated pigment pastes, pigments, paints, and aluminum flakes, such aluminum being thereby transformed to a form capable of resisting attack from an aqueous medium. The vanadium-treated aluminum flakes may be obtained by posttreatment or by milling aluminum with a compound capable of providing vanadium, such as ammonium vanadate.

EP 0 104 075 A1

./...

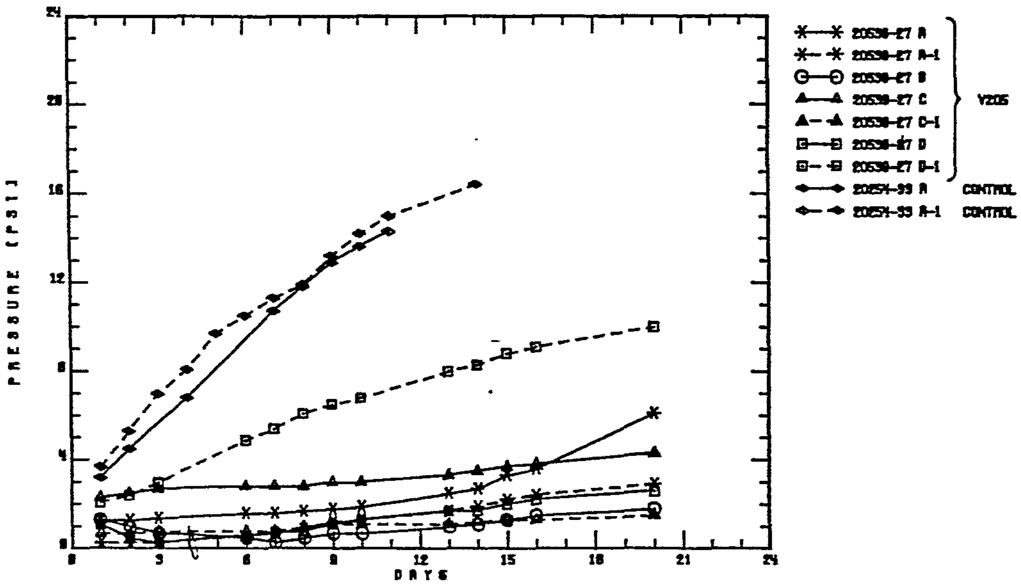


PRESSURE IN 125 F BOMB VS NUMBER OF DAYS
IN BOMB
FOR VARIOUS VANADIUM SALT TREATED PASTES

FIGURE 1

# VANADIUM-STABILIZED ALUMINUM PARTICLES

## SUMMARY OF THE INVENTION

In a generic aspect of the invention, there is provided a new composition of matter which comprises aluminum particles and vanadium at the surface of said aluminum particles. Vanadium is present in a concentration per surface area effective to retard the hydrogen gas formation caused by the reaction of aluminum with water that would normally occur when the aluminum particles are contacted with water.

In one aspect of the invention, a pigment paste is provided which comprises a major amount of vanadium-treated aluminum flakes and a minor amount of a compatible liquid. Generally, the compatible liquid used for aluminum flakes in the prior art has been restricted to organic materials such as a hydrocarbon liquid. While a hydrocarbon liquid may indeed be used to form the pastes of the present invention, the surprising resistance to attack by water demonstrated in hydrogen evolution tests vehicles indicates the advantageous use of aqueous media, which are desired for various water-based uses, such as water-based paint formulations. The vanadium-containing aluminum flakes are obtained, e.g. by milling aluminum in the presence of a compound capable of providing vanadium in a form effective for treating the surface of the aluminum as it is formed into said aluminum flakes or by mixing an appropriate form of vanadium with aluminum flakes subsequent to milling. A compound capable of providing vanadium in a suitable form is ammonium vanadate ($NH_4VO_3$), also referred to as ammonium meta vanadate. Preferred compounds for providing vanadium according to the present invention are vanadium pentoxide ($V_2O_5$) and/or meta vanadic acid ($HVO_3$). The vanadium-treated aluminum flakes typically constitute about 60% to 75% by weight of said pigment paste. For stability against the water reaction, the vanadium to which the aluminum is exposed is used in an effective

amount and preferably (calculated based upon the weight of aluminum) is at least about 1% by weight, and preferably at least about 4% by weight.

In a second aspect of the present invention, there is provided an aluminum pigment which contains aluminum flakes which contain vanadium on their surfaces, said aluminum pigment including a minor amount of a lubricant.

In a further embodiment, there is provided a coating, such as an aluminum-pigmented asphalt or paint, which contains vanadium-treated aluminum flakes. In a further embodiment, there is provided aluminum flakes which generally have a surface area of from about 0.05 to about 15 square meters per gram of aluminum by weight, which aluminum flakes have been treated to contain vanadium on their surfaces in an effective amount to retard the reaction of the aluminum with water, thereby inhibiting evolution of hydrogen gas that, particularly in a sealed container such as used for paints, could lead to a rupture of the container and degradation of the optical properties of the aluminum.

## BRIEF DESCRIPTION OF THE DRAWING

Figure 1 is a series of plots of pressure in bomb versus number of days in bomb for examples of the invention compared with two control examples. The example numbers on the right side of the drawing correspond to those appearing in the left columns of Tables I and II.

## DETAILED DESCRIPTION OF THE INVENTION

Aluminum particles as contemplated in the invention generally have a surface area which may range from about 0.05 to about 15 $m^2/gm$ weight of aluminum. The aluminum particulates that are specifically contemplated as preferred aspects of the invention are aluminum flakes, powders and granules. In a preferred aspect, the surface area of the aluminum is from about 2 to about 7 $m^2/gm$.

The present invention, e.g. provides a vanadium-stabilized aluminum flake, particularly suitable for pigments which may be used, for example, in paints or

coatings for automobiles, and coatings for roofing. The present invention contemplates aluminum flakes which contain a minor amount of lubricant. Ammonium vanadate is contemplated as a compound for treating the aluminum flakes. Vanadium pentoxide ($V_2O_5$) and meta vanadic acid ($HVO_3$) are contemplated as preferred compounds for treating the aluminum flakes. Treatment may be accomplished by mixing vanadium compound with an existing commercial grade aluminum pigment or by introducing vanadium compound treatment into the ball mill during manufacture of the pigment.

Rolles, U.S. patent 3,181,962, explains the types of lubricants that may be used in the preparation of aluminum flake to provide both leafing and non-leafing pigments as generally comprising aliphatic fatty acids. The type of lubricant may vary dependent upon whether a leafing or non-leafing pigment is contemplated and the selection of the particular species of lubricant may be made in accordance with the discussion of that patent at column 2, lines 8-27. Other lubricants for non-leafing pigments are explained in Rolles et al, U.S. Patent No. 3,264,129.

The amount of vanadium to present to aluminum flake for maintenance of the optical properties, e.g., reflectance and color, of the aluminum flakes is generally from about 0.5% to about 5% by weight of the weight of aluminum flakes. In terms of ammonium vanadate, the amount of compound is from about 5% to about 10% by weight of the weight of aluminum. For vanadium pentoxide, the range is about 1% to about 10%.

In a preferred embodiment there is contemplated about 10% by weight ammonium vanadate (corresponding to about 4 percent by weight of vanadium).

It is to be understood that vanadium-treated aluminum flakes prepared in accordance with the invention find wide applicability, particularly in areas where aluminum flakes have been heretofore commercially excluded. Thus,

the vanadium treatment of the invention provides an enhanced stability for coating compositions incorporating aluminum flakes and containing water such that the aluminum is subject to attack by water. For example, aluminum flakes have been considered important in the preparation of bituminous coatings for the roofing industry. However, in many bituminous coatings containing water, aluminum flakes react with the water, thereby limiting the application of aluminum flake in these systems.

Water-based paints constitute an area for use that is generally not considered suitable for aluminum flake pigments, particularly not where the pigment is incorporated into the paint long prior to the actual use. For example, it is conventional to provide paints in sealed containers, but the evolution of gas due to the aluminum oxidation, occurring with prolonged contact of aluminum with water, causes the pigment to deteriorate and creates the possibility of container rupture. The resistance to oxidation, manifested through the negative findings in hydrogen evolution tests conducted on the pigments of the present invention, indicates the suitability of the aluminum flakes and pigments of the present invention in water-based paints. Aqueous coating compositions in accordance with the present invention may include ingredients such as shown in High et al., U.S. Patent No. 3,918,984, granted November 11, 1975.

Typical compositions for water borne coatings have a content of solids from about 20 to about 70 percent, which is made up of the aluminum flakes and other non-volatile components of the coating. A suitable amount of aluminum flake is included to achieve the desired protective and decorative properties of the coating. In the case of coatings involving bituminous emulsions, which contain water, it is to be understood that any of the conventional bituminous bases may be used for the composition of the present invention, including pitch, asphalt, tars and residues of petroleum

distillations. Conventional fillers are also contemplated, such as clays, silica, asbestos, talc, magnesia, lime, barium oxide, pulverized slag and sawdust. For further detail, see the Kirk-Othmer Encyclopedia of Chemical Technology, Second Edition, Volume 2, particularly pages 778 to 781 and 797 to 798.

For a better understanding of the types of aluminum pigments that have been used in the industry, reference is made to the technical publication, Alcoa Aluminum Pigments Product Data [Section FA2C-1, Powder and Pigments, Rev. June, 1979 (Aluminum Company of America)] and to R. Rolles, "Aluminum Flake Pigment", in Pigment Handbook, edited by T.C. Patton, Vol. I, 785 - 806, Wiley-Interscience, (1973), the complete text of both documents are incorporated herein by reference. Pigments which include a lubricant and the vanadium-treated pigments of the present invention are specifically contemplated as preferred aspects of the present invention. Such pigments are small, thin flakes of highly polished metal which may be used in roof coatings, maintenance paints, and product finishes. A coating containing aluminum pigments reflects damaging ultraviolet, infrared, and visible light, while it enhances the appearance of the coating material. The manufacture of aluminum pigments is explained in the cited manual, Alcoa Aluminum Pigments Product Data, supra at pages 5-6 and the cited publication of Rolles, supra, such techniques being suitable for the present vanadium-treated aluminum flakes, including the vanadium incorporation in situ by provision of vanadium compound, in the initial milling process or vanadium compound addition to an otherwise finished pigment. The use of the milling process is preferred.

In the milling process, ball mills are used, as explained, e.g. at page 798 of the cited Rolles publication, to roll, forge and burnish aluminum particles into bright, small metallic flakes. The process, and

production of the flake product, of the invention can both be carried out in conjunction with this milling. The mill will in general contain mineral spirits as the liquid medium for the milling process, and a coupling solvent, such as carbitol acetate or isopropanol, is used for continuously metering small amounts of aqueous ammonium vanadate solution into mineral spirits phase and thereby making it accessible to the nascent aluminum surfaces.

Besides milling, the process, and production of, in general, any particulate aluminum product, of the invention can be carried out by contacting aluminum particulates with vanadium by the technique of vanadium compound addition to an otherwise finished pigment, this being termed "posttreatment." Posttreatment will typically involve making a solution of vanadium compound in water and then mixing such solution with the aluminum particulate. If the aluminum particulate is in the form of a pigment in a mineral spirits-based paste form, a coupling solvent as described in the previous paragraph is used in posttreatment too.

The treated aluminum flakes of the present invention may be substituted for conventional aluminum flakes in aluminum pigments that are sold as pastes with a major amount of aluminum and a minor amount of liquid hydrocarbon, a commercially available aluminum paste having about 65% flaked aluminum and 35% hydrocarbon. In accordance with the present invention, an aluminum paste is contemplated as one aspect of the invention, wherein there is a major amount of aluminum, a minor amount of liquid hydrocarbon such as mineral spirits and from about 0.5 to about 5% vanadium by weight aluminum. It is, of course, to be recognized that in theory a larger percentage of liquid hydrocarbon could be included in the aluminum paste, but from a practical standpoint it is desirable to have a maximum amount of the aluminum.

It should be appreciated that with the stability

against water attack provided by the instant vanadium-treated aluminum flakes, a major application of the instant invention is found in the area of automobile paints. Automobile uses of aluminum pigments are explained in detail in the technical manual, Alcoa Aluminum Pigments for Automotive Paint Finishes, Section FA2C-2, December 1976, Powder and Pigments (Dec. 1976), the entire contents of which are incorporated herein by reference.

It is to be understood that in the generic aspect of the present invention, the amount of aluminum that is included in automobile paints or asphalt compositions may vary to the extent that is desired for the particular end use. In a preferred aspect of the paints and asphalt compositions which are considered below, exemplary ranges are set forth. The stability that is provided against water attack for the aluminum particulates of the invention is a distinct advantage. The aluminum flakes are, in one aspect of the present invention, included in pigmented maintenance coatings, with, for example, from about one to about three pounds of paste per gallon of the total pigmented maintenance coating. Water-based asphalt emulsions also preferably incorporate the aluminum flakes of the present invention, and form a preferred aspect of the present technology. In a typical asphalt formation, an asphalt emulsion contains from about one pound to about three pounds of aluminum paste and preferably from about 1.5 to about 2.5 pounds per gallon. In the case of automotive coatings, the amount of aluminum paste will be typically in the range of 0.1 to 1½ pounds per gallon. It is to be understood that apart from the aluminum flake aspect of the present invention, aluminum particulates which are not milled, as well as dedusted flake powders, may be used in their normal applications, the vanadium compound providing protection for the applications of these aluminum particulates as well.

EXAMPLE I

A standard grade aluminum pigment was given ammonium vanadate ($NH_4VO_3$) treatment. A nonleafing aluminum pigment of regular purity (Grade 229) was used in this experiment.

3.0 g ammonium vanadate was placed in an Erlenmeyer flask on a magnetic stirring plate into a medium of carbitol acetate and water (10% of the total volume of the medium being water and the remainder carbitol acetate). The water was added first. Before adding the carbitol acetate, stirring was initiated to produce a saturated solution of the ammonium vanadate in the water, after which, carbitol acetate was added to produce a total liquid volume of 110 ml. In this example, 11 ml water and 99 ml of carbitol acetate were used.

Any undissolved ammonium vanadate was allowed to remain in contact with the solution. Sufficient amount of aluminum pigment Grade 229 in paste form, including stearic acid and mineral spirits, was added to yield 9.0 g of aluminum, and the beaker was covered loosely with aluminum foil, the slurry being left to react for a 24 hour period while stirring. (The period of 24 hours was measured to an accuracy of about one half hour.) The purpose of the carbitol acetate is to act as a coupling solvent, continuously metering small amounts of aqueous ammonium vanadate solution into mineral spirits phase and thereby making it accessible to the nascent aluminum surfaces.

Following this 24 hour period, the slurry was filtered and the filter cake washed well with deionized water at room temperature. A final rinse was made with acetone to remove residual water, after which the powder was allowed to air dry.

The amount of metallic aluminum remaining in the treated powder was determined by digesting an accurately weighed sample in concentrated sodium hydroxide solution and calculating the mass-percentage of metal content from

the volume of hydrogen generated in accordance with the following equation:

mass % = (PV)/0.5692RTW

where P = pressure in atmospheres

V = volume in cubic centimeters (cc)

R = 82.057 cc·atm/°C

T = absolute temperature

W = mass in grams

Converted oxides and aluminum oxide dissolve in the caustic solution without evolution of hydrogen. A value of 66% was obtained with a comparison standard of 92%, which is for a control sample without the vanadium treatment of this example. This demonstrates that the vanadium treatment resulted in chemical conversion of a portion of the metallic aluminum.

The product was tested for stability in the following manner:

A 1.0 g sample was heated in a 0.01 M aqueous sodium tetraborate solution (borax, pH = 9) at a temperature of 140°F.

The volume of hydrogen gas generated from the aluminum-water reaction in sodium tetraborate solution was measured over a period of six hours in inverted burettes. The effect of pressure was equalized according to conventional techniques. The results of borax stability test in terms of the amount of hydrogen generated was 0.2 ml as compared to the gross gassing which would be obtained with untreated aluminum flakes. The borax stability data establishes that the ammonium vanadate treatment produced a pigment of satisfactory stability.

In a black and white cryptometer test as per pages 14 and 15 of Gardner et al., Physical and Chemical Examination of Paints, Varnishes, Lacquers and Colors, 10th Edition, May, 1946, the properties of the treated pigment were evaluated in DuPont's acrylic masstone system. A No. 7 top plate with a wedge constant K equalling 0.007 was used. A reading of 44 crypt units

was obtained, while the control sample without vanadium treatment gave a reading of 24. The term "crypt units" corresponds to the measurement in millimeters for disappearance and appearance of the black to white transition line of demarcation; this measurement is referred to as "l, the wedge reading" in the above-cited work of Gardner et al. The measurement relates to the wet hiding of the pigment dispersion base and is an indicator of changes in the physical and chemical properties of the aluminum flake. A 95% confidence limit for a significant difference between the treated and untreated control (Student t test) is 4 crypt units.

EXAMPLE II

The conditions of Example I were repeated, however, substituting for the 10 percent water-90 percent carbitol acetate used in that example, 30 percent water and 70 percent carbitol acetate. Comparable results were obtained with a borax stability test result showing no measurable hydrogen generation (0.0 ml), and the same 66% aluminum metal (again against a control sample of 92%). The same 44 crypt value was obtained as in Example I, against the control value of 24.

The metal analysis shows a relatively uniform conversion of aluminum consistent with the results indicated above.

EXAMPLE III

The conditions of Example I were repeated, however, substituting for the 10 percent water-90 percent carbitol acetate used in that example, 50 percent water and 50 percent carbitol acetate. The borax stability test result showed a similar hydrogen generation, in this case 0.8 ml, and 65% aluminum metal (again against a control sample of 92%). A 40 crypt value was obtained against the control value of 24.

The metal analysis shows a relatively uniform conversion of aluminum consistent with the results indicated above.

EXAMPLE IV

The conditions of Example I were repeated, however, substituting a mixture of 30% water and 70% isopropanol for the water-carbitol acetate mixture of Example I. Thus, isopropanol is the coupling solvent for this example. The borax stability test result showed hydrogen generation of 0.5 ml, and the same 66% aluminum metal (again against a control sample of 92%). An offscale crypt value was obtained (50+) against the control value of 24.

The metal analysis shows a relatively uniform conversion of aluminum consistent with the results indicated above.

EXAMPLE V

Example I was repeated, but instead of using the aluminum pigment of regular purity of that example, there was instead substituted a non-leafing aluminum pigment of high purity (Grade 7370). Following the otherwise identical conditions of Example I, satisfactory test results were obtained with the borax stability test showing generation of 0.1 ml of hydrogen. The percent aluminum metal test showed 72%, with a control sample giving a comparison value of 95%. A crypt value of 43 was obtained, compare to the control value of 19. The metal analysis was consistent with the results indicated above.

EXAMPLE VI

The conditions of Example V were repeated, however, substituting for the 10 percent water-90 percent carbitol acetate used in that example, 30 percent water and 70 percent carbitol acetate. The borax stability test result showed hydrogen generation of 0.1 ml, and 69% aluminum metal (again against a control sample of 95%). A 33 crypt value was obtained against control value of 24.

The metal analysis shows a relatively uniform conversion of aluminum consistent with the results indicated above.

EXAMPLE VII

The conditions of Example V were repeated, however, substituting for the 10 percent water-90 percent carbitol acetate used in that example, 50 percent water and 50 percent carbitol acetate. The borax stability test result showed hydrogen generation of 0.0 ml, and 70% aluminum metal (again against a control sample of 95%). A 42 crypt value was obtained against control value of 24.

The metal analysis shows a relatively uniform conversion of aluminum consistent with the results indicated above.

EXAMPLE VIII

The conditions of Example V were repeated, however, substituting a mixture of 30% water and 70% isopropanol for the water-carbitol acetate mixture of Example I. The borax stability test result showed no measurable hydrogen generation (0.0 ml), and 69% aluminum metal (again against a control sample of 92%). A crypt value was obtained of 41 against control value of 19.

The metal analysis shows a relatively uniform conversion of aluminum consistent with the results indicated above.

EXAMPLE IX

The same conditions used in Example I were repeated, substituting this time a standard leafing aluminum pigment (Grade 6230) for the aluminum pigment used in Example I, but without conducting crypt measurements. The test results were comparable to the results of Example I, with metal analysis showing a relatively uniform conversion of aluminum consistent with the results for the previous examples. In the borax test, however, it was necessary to wet the powder into the borax solution with a small amount of acetone, this acetone facilitating their dispersion. The result of the borax stability test showed a generation of 0.2 ml of hydrogen. The aluminum metal data shows 72% (measured against a control of 95%).

EXAMPLE X

The test of Example IX was repeated, but substituting a 30% water-70% carbitol acetate medium for the medium used in Example IX. 0.2 ml hydrogen was generated in the borax stability test. The results of the test showed 72% aluminum metal (versus 95% control).

EXAMPLE XI

The test of Example IX was repeated, but substituting a 50% water-50% carbitol acetate medium for the medium used in Example IX. 0.2 ml hydrogen was generated in the borax stability test. The results of the test showed 70% aluminum metal (versus 95% control).

EXAMPLE XII

The test of Example IX was repeated, but substituting a 30% water-70% isopropanol medium for the medium used in Example IX. 0.2 ml hydrogen was generated in the borax stability test. The results of the test showed 71% aluminum metal (versus 95% control).

EXAMPLE XIII

Room temperature slurry treatments were investigated under considerations following the teachings of Example II. Data for the borax stability in terms of ml of hydrogen generated, percentage aluminum metal and crypt measurements were made, all in accordance with the procedures of Examples I-VIII. Table I which follows sets forth the results:

TABLE I

| Conc. $NH_4VO_3$ | Borax Stability: Room Temp. Wash (Hrs) 4 | Borax Stability: Room Temp. Wash (Hrs) 24 | Borax Stability: Hot Wash 4 | Borax Stability: Hot Wash 24 | % Al Metal: Room Temp. Wash (Hrs) 4 | % Al Metal: Room Temp. Wash (Hrs) 24 | % Al Metal: Hot Wash 4 | % Al Metal: Hot Wash 24 | Crypt: Room Temp. Wash (Hrs) 4 | Crypt: Room Temp. Wash (Hrs) 24 | Crypt: Hot Wash 4 | Crypt: Hot Wash 24 |
|---|---|---|---|---|---|---|---|---|---|---|---|---|
| | | | | | | | | | Untreated = 26 | | | |
| None | Gross | - | - | Gross | 92% | - | - | 90% | 26 | - | - | 26 |
| 5.6% | 17.8ml | 0.0ml | 24.8ml | 15.8ml | 84 | 84% | 87% | 85 | 24 | 25 | 24 | 24 |
| 11.1% | 0.0 | 0.0 | 11.2 | 8.3 | 80 | 80 | 79 | 84 | 26 | 26 | 25 | 26 |
| 22.2% | 0.1 | 0.2 | 0.3 | 0.0 | 74 | 72 | 78 | 70 | 30 | 29 | 31 | 30 |
| 33.3% | 0.5 | 0.6 | 0.0 | 0.1 | 70 | 64 | 77 | 74 | 32 | 32 | 29 | 30 |

EXAMPLE XIV

Samples prepared by room temperature slurry treatments followed by a 140°F water wash were measured for borax stability, percentage aluminum metal and crypt measurements which are shown in the table which follows below. The lower effective threshold limits appear to be in the 3-6% concentration range and 3-4 hours reaction time. Optical properties are unaffected at 11% ammonium vanadate but are noticeably affected at 22%, putting the upper cutoff concentration somewhere in that range. The water/carbitol acetate ratio is also important; as the relative amount of carbitol acetate is increased, pigment dispersion improves, thereby improving reaction efficiency over the flake surfaces. Conversely, an increase in the relative amount of water causes more ammonium vanadate to enter into solution and hypothetically reduces reaction time; however, poorer pigment dispersion at the higher relative water concentrations apparently leads to less efficient conversion of the flake surfaces.

Microscopic examination of masstone panels indicates that warm water is more effective in washing unreacted ammonium vanadate from the filter cake, although room temperature water does an adequate job. In those instances where incomplete washing was observed, only a few inorganic crystals could be found in any random microscopic field (500x).

The results are summarized in Table II below:

TABLE II

Room Temperature Slurry Treatments

140°F $H_2O$ Wash

| Conc. $NH_4VO_3$ | Borax Stability 3 Hrs. | Borax Stability 1 Hr. | Borax Stability ¼ Hr. | % Al Metal 3 Hrs. | % Al Metal 1 Hr. | % Al Metal ¼ Hr. | Crypt 3 Hrs. | Crypt 1 Hr. | Crypt ¼ hr. |
|---|---|---|---|---|---|---|---|---|---|
| 33% Water - 67% Carbitol Acetate | | | | | | | | Untreated = 22 | |
| 5.6% | 0.2 ml | 17.6ml | Gross | 85% | 86% | - | 24 | 26 | - |
| 3.3% | 1.0 | Gross | Gross | 86 | - | - | 25 | - | - |
| 1.1% | Gross | Gross | Gross | - | - | - | - | - | - |
| 50% Water - 50% Carbitol Acetate | | | | | | | | | |
| 5.6% | 0.3 | 35.2 | Gross | 85 | 87 | - | 24 | 26 | - |
| 3.3% | 17.1 | Gross | Gross | 86 | - | - | 29 | - | - |
| 1.1% | Gross | Gross | Gross | - | - | - | - | - | - |
| 67% Water - 33% Carbitol Acetate | | | | | | | | | |
| 5.6% | 6.0 | Gross | Gross | 85 | - | - | 26 | - | - |
| 3.3% | Gross | Gross | Gross | - | - | - | - | - | - |
| 1.1% | Gross | Gross | Gross | - | - | - | - | - | - |

EXAMPLE XV

Following the teachings of Example III, a three hour slurry treatment was given to a 5.6% ammonium vanadate product (based upon aluminum weight), with a 140°F water wash, however, with a variety of pigments being tested. The three hour treatment was completely ineffective for the leafing pigments and was only partially effective for the nonleafing pigments. The results shown in Table III below indicate that different treatment conditions may be required for different pigment grades.

TABLE III

3 HOUR SLURRY TREATMENTS

5.6% $NH_4VO_3$ ON Al WEIGHT, 140°F WATER WASH

50% WATER - 50% CARBITOL ACETATE

| | Borax Stability | | % Al Metal | | Crypt | |
|---|---|---|---|---|---|---|
| | Untreated Control | Treated | Untreated Control | Treated | Untreated Control | Treated |
| Nonleafing Pigments: | | | | | | |
| 2255 | Gross | Gross | 88% | 86% | - | - |
| 2250 | Gross | 20.9ml | 97 | 96 | 31 | 30 |
| 229- | Gross | Gross | 92 | 87 | - | - |
| 226- | Gross | Gross | 95 | 94 | - | - |
| 1594 | Gross | Gross | 82 | 80 | - | - |
| 7378 | Gross | 0.8ml | 98 | 96 | 33 | 46 |
| 7370 | Gross | 27.6 | 95 | 87 | 17 | 21 |
| 7364 | Gross | Gross | 92 | 88 | - | - |
| 726- | Gross | Gross | 95 | 94 | 26 | 26 |
| Leafing Pigments: | | | | | | |
| 6230 | Gross | Gross | 97 | 96 | - | - |
| 6205 | Gross | Gross | 91 | 89 | - | - |
| 6211 | Gross | Gross | 89 | 89 | - | - |
| 6571 | Gross | Gross | 85 | 86 | - | - |

## EXAMPLE XVI

Reaction conditions under reflux conditions were tested. In one series of experiments, commercial grades 229 and 7370 nonleafing pastes were slurried in carbitol acetate containing 10% water by volume. The slurries contained 9.0g aluminum per 100ml. Reagent concentrations were 11% and 33% on aluminum weight, and all reagents were run both with and without acidification (acetic acid, 1% by volume).

The reaction slurries were heated while stirring and were held at reflux for one hour. They were then filtered while warm, washed thoroughly with warm water and were finally rinsed with acetone. The product powders were allowed to dry at room temperature. Experimental results are summarized in Table IV below.

TABLE IV

Reactions Under Reflux

| Concentration of Ammonium Vanadate | Acetic Acid Present | Borax Stability ml | ml | % Al Metal | | Crypt | |
|---|---|---|---|---|---|---|---|
| 11 | No | 53 | 100 | 86 | 85 | 36 | 43 |
| 11 | Yes | 0.0 | 38 | 87 | 79 | 34 | 43 |
| 33 | No | 0.0 | 0.5 | 83 | 76 | 43 | 42 |
| 33 | Yes | 0.0 | 0.0 | 71 | 69 | 46 | 43 |

Ammonium vanadate provided excellent stability at the higher concentration level, but wet hiding was significantly degraded from the original crypt values of 29 (grade 229) and 27 (grade 7370). Acidification of the reation medium improved treatment effectiveness at 11% ammonium vanadate concentration, but had no effect at higher concentration.

EXAMPLE XVII

To investigate in situ milling treatments and, more particularly, to explore the possibility of treating aluminum pigment with ammonium vanadate as the pigment surfaces are being generated, a one-liter capacity lab shaker mill was employed. The mill was charged with steel balls plus 56g Alcoa grade 120 atomized aluminum powder, 62ml mineral spirits, 10ml carbitol acetate, and 5psi $O_2$ to supplement the ambient atmosphere. Varying amounts of water were also placed in the mill. The purpose of the carbitol acetate is to act as a coupling solvent, continuously metering small amounts of aqueous ammonium vanadate solution into mineral spirits phase and thereby making it accessible to the nascent aluminum surfaces. The contents were milled three hours. The slurry was then scalped through 80 mesh and filtered. The filter cake was rinsed briefly with hexane, and the pigment was spread on aluminum foil to dry at room temperature. Results are summarized below in Table V.

TABLE V

AMMONIUM VANADATE INCORPORATED INTO BALL MILL

| Example No. | Lubricant | Concentration (On Al Wt.) Lubricant | $NH_4VO_3$ | Water | Borax Stability |
|---|---|---|---|---|---|
| 1 | Stearic acid | 5.0% | - | 1.8% | Gross |
| 2 | Stearic acid | 5.0 | 5.0% | 1.8 | 2.1ml |
| 3 | Stearic acid | 5.0 | 5.0 | 7.1 | 2.2 |
| 4 | Stearic acid | 5.0 | 10.0 | 1.8 | 1.9 |
| 5 | Stearic acid | 5.0 | 10.0 | 7.1 | 1.9 |
| 6* | None | - | 5.0 | 1.8 | Gross |
| 7* | None | - | 5.0 | 7.1 | Gross |
| 8* | None | - | 10.0 | 1.8 | Gross |
| 9* | None | - | 10.0 | 7.1 | Gross |

* Strong odor of ammonia after milling.

All of the experimental pigments milled with lubricant-ammonium vanadate combinations have reasonable-to-excellent stability. Those milled with lubricant or ammonium vanadate alone have poor stability. A higher concentration of ammonium vanadate improves stability somewhat for nonleafing pigments, but does not have an apparent effect in stearic acid mills.

The evolution of ammonia in certain runs in the mill is of some interest. In contrast with other runs, this behavior suggests different reaction mechanisms in the mill dependent upon the presence or absence of fatty acid.

One possibility that could explain this phenomenon involves a potential reaction which may convert part of the ammonium vanadate reagent to meta vanadic acid, $HVO_3$, prior to reaction with the aluminum surfaces. Meta vanadic acid is commercially available in anhydride form (vanadium pentoxide, $V_2O_5$).

In the examples which follow, the effects of process variables on product stability were quantified with four

tests. The first test was to screen samples by measuring the volume of hydrogen liberated by deionized water at 200°F through the reaction:

$$2Al(paste) + 6H_2O \rightarrow 2Al(OH)_3 + 3H_2 \qquad (1)$$

over a six-hour period. In the second test, the paste was mixed in roof coating asphalt emulsion Koppers 460 and placed in a sealed bomb at 125°F. Pressure was measured as a function of time. For the third test, the emulsion/paste mixture was spread on an aluminum panel and after the material dried, light reflectivity of the coated panel was measured. In the last test, samples of emulsion/paste were placed in cans and sealed at room temperature. Periodically, a pressure gauge was used to puncture the can and pressure was read. The effect of aging on stability of samples was also assessed.

To prepare the pastes, in situ milling treatments were performed in a sealed stainless steel cylinder having an internal gas volume of about 850 $cm^3$, and having a pressure gauge attached. Fifty-six grams of grade 108 atomized aluminum powder, 100 half-inch diameter and 650 grams of quarter-inch diameter stainless steel balls were loaded into the mill, followed by addition of the required amounts of vanadium compound, water, carbitol acetate, lubricant and mineral spirits. After being sealed, the mill was loaded with enough oxygen (in addition to one atmosphere of air) to give a pressure reading of five pounds, or 30 pounds in the case of the control samples. At the conclusion of each run, mill contents were filtered through an 80 mesh screen and the solid part of the material which passed through the screen was separated from the liquid part on another screen with the solids and filtrate weighed.

The water stability screening test was conducted by placing the milled paste in a sealed burette containing 25 $cm^3$ of water maintained at 200°F temperature. Gas volume readings were made at the end of six hours for duplicate tests on the same sample. The bomb stability

test was performed by mixing 6% Atlas G3300 wetting agent with the paste and mixing it with Koppers 460. asphalt emulsion at a paste concentration level of two pounds per gallon of emulsion. The bomb with the attached pressure gauge was placed in an oven to attain the 125°F. Pressure readings were made daily.

Shelf-life tests were performed on samples prepared in the same manner, sealed in pint cans and kept at room temperature. Pressure gauges were used to puncture the lids for pressure measurements periodically.

Total reflectance measurements of pastes dispersed in asphalt emulsion were made on samples drawn down on an aluminum panel and dried.

Table VI characterizes the $V_2O_5$-treated samples and shows that four samples (Examples 20539-27B, 27B-1, 27D, and 27D-1) were produced without water. The filtrate from these latter samples were dark in color and the samples were less stable in the hot water test than the other $V_2O_5$-treated materials. Total reflectances of all these samples apparently were not affected by the darkening in any substantial way. Figure 1 shows the 125°F bomb test results which were better than the control samples. Results are also better than $NH_4VO_3$-treated materials. Other results are presented in Table VII.

TABLE VI

Treatment and Characterization of $V_2O_5$ Samples - 56 Grams #108 Al Powder

Treatment Conditions

| Example Number | Milling Time (hr.) | $V_2O_2$ | | Calc'd as V | | Stearic Acid | | Carbitol Acetate | | D.I. $H_2O$ | | Mineral Spirits | |
|---|---|---|---|---|---|---|---|---|---|---|---|---|---|
| | | (g) | (wt %) | (g) | (wt %) | (g) | (wt %) | (g) | (wt %) | (g) | (wt %) | (ml) | (ml/100g) |
| 20254-33A | 3 | 0 | 0 | 0 | 0 | 2.8 | 5.0 | 0 | 0 | 0 | 0 | 82 | 146.4 |
| " -33A-1 | " | " | " | " | " | " | " | " | " | " | " | " | " |
| 20539-27A | 3 | 4.35 | 7.8 | 2.4 | 4.3 | 3.1 | 5.5 | 20.6 | 36.8 | 4.6 | 8.2 | 58.3 | 104.1 |
| " -27A-1 | " | " | " | " | " | " | " | " | " | " | " | " | " |
| " -27B | " | " | " | " | " | " | " | " | " | 0 | 0 | " | " |
| " -27B-1 | " | " | " | " | " | " | " | " | " | " | " | " | " |
| " -27C | " | " | " | " | " | " | " | " | " | 4.6 | 8.2 | " | " |
| " -27C-1 | " | " | " | " | " | " | " | " | " | " | " | " | " |
| " -27D | " | " | " | " | " | " | " | " | " | 0 | 0 | " | " |
| " -27D-1 | " | " | " | " | " | " | " | " | " | " | " | " | " |

(1) In Examples 20539-27A/A-1, carbitol acetate and water were premixed before adding to the shaker mill.

(2) In Examples 20539-27C/C-1, $V_2O_2$, carbitol acetate, and water were premixed before adding to the shaker mill.

(3) In Examples 20539-27D/D-1, $V_2O_2$ and carbitol acetate were premixed before adding to the shaker mill.

TABLE VII: Results

| Example No. | | 6-Hour Stability in 200°F D.I. Water $H_2$ Evolved, ml | | | Comments | Total Reflectance, % | Shelf-Life Stability Pressure, psi | |
|---|---|---|---|---|---|---|---|---|
| | | 1st | 2nd | Avg. | | | 1 mo. | 1.6 mos. |
| I. | Controls | | | | | | | |
| | 830 Hydropaste | | 860 | | | 47 (2 mos. aging) | | |
| | 20254-33A | 16.7 | 16.3 | 16.5 | | 38 | 0 | 0 |
| | " -33A-1 | 12.7 | 15.2 | 14.0 | | 37 | 0 | 0 |
| II. | $V_2O_5$-Treated | | | | | | | |
| | 20539-27A | 0.4 | 0 | 0.2 | | 37 | | |
| | " -27A-1 | 0 | 1.2 | 0.6 | | 36 | | |
| | " -27B | 4.5 | 5.3 | 4.9 | Filtrate Dark | 34 | | |
| | " -27B-1 | 22.5 | >25 | - | Filtrate Dark | - | | |
| | " -27C | 0.5 | 0.6 | 0.6 | | 38 | | |
| | " -27C-1 | 0 | 1.3 | 0.7 | | 38 | | |
| | " -27D | 3.4 | 3.8 | 3.6 | Filtrate Dark | 35 | | |
| | " -27D-1 | 0.9 | 3.8 | 2.4 | Filtrate Dark | 39 | | |

CLAIMS:

1. Aluminum particulates treated with vanadium for retarding the reaction of the aluminum with water for inhibiting the generation of hydrogen gas.

2. Aluminum particulates of claim 1 which are aluminum flakes.

3. Aluminum particulates of claim 2 which include a lubricant.

4. Aluminum particulates of claim 3, the particulates being a leafing pigment.

5. Aluminum particulates of claim 3, the particulates being a non-leafing pigment.

6. Aluminum particulates of claim 1, wherein treatment is with a vanadium compound, said compound being ammonium vanadate.

7. Aluminum particulates of claim 1, wherein treatment is with a vanadium compound, said compound being vanadium pentoxide.

8. Aluminum particulates of claim 1, wherein treatment is with a vanadium compound, said compound being meta vanadic acid.

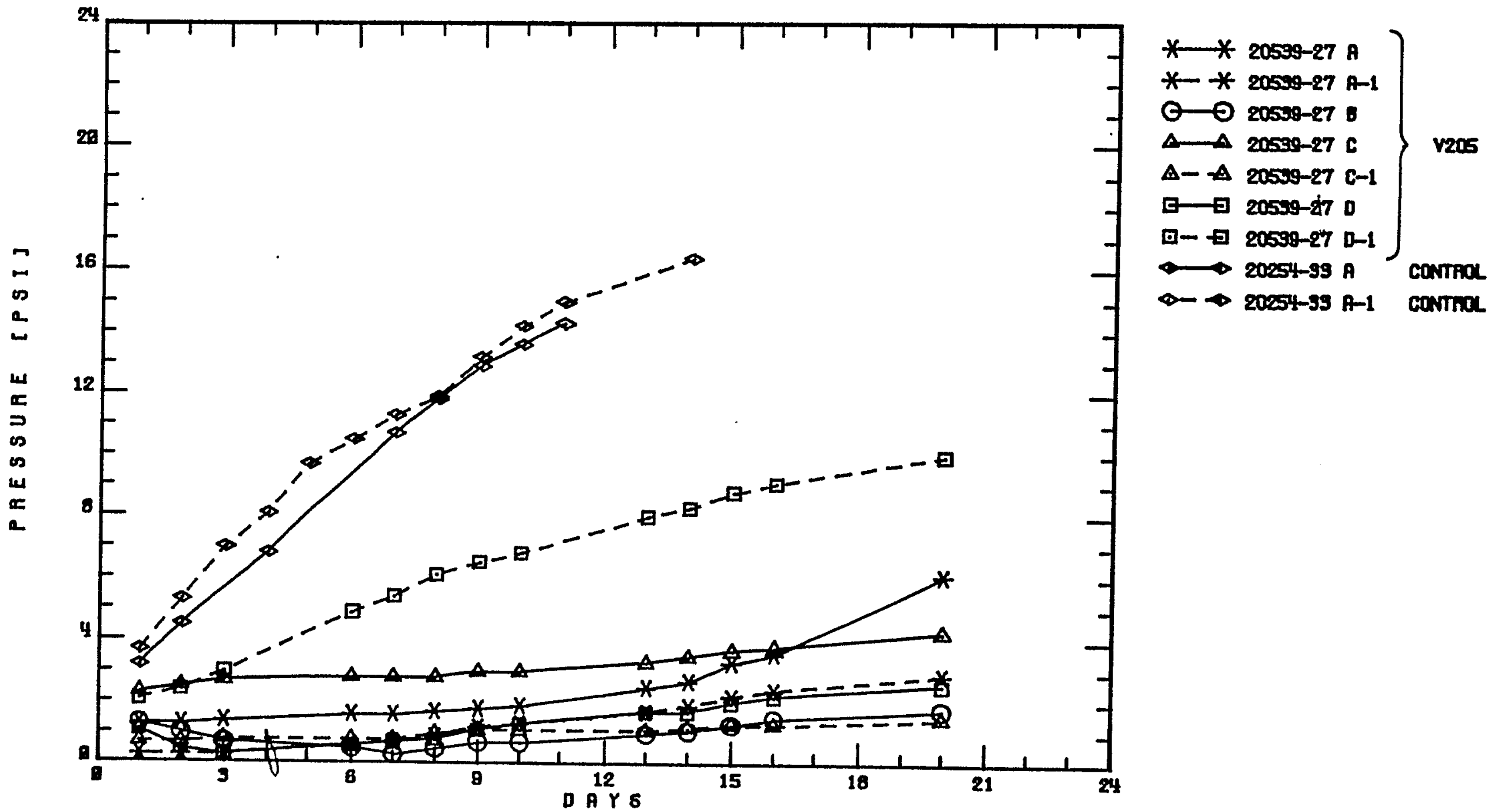


PRESSURE IN 125 F BOMB VS NUMBER OF DAYS IN BOMB

FOR VARIOUS VANADIUM SALT TREATED PASTES

FIGURE 1

8413

0104075

European Patent Office

# EUROPEAN SEARCH REPORT

Application number

EP 83 30 5496

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | CHEMICAL ABSTRACTS, vol. 96, no. 10, March 1982, page 288, no. 73356n, Columbus, Ohio, USA & JP - A - 81 136 978 (SHOWA ALUMINIUM K.K.) 26-10-1981 * Abstract * ----- | 1,8 | C 09 C 1/64<br>C 09 C 3/06<br>B 22 F 1/02<br>B 22 F 9/04<br>B 22 F 1/00<br>C 23 F 7/00 |
| | | | TECHNICAL FIELDS SEARCHED (Int. Cl 3) |
| | | | C 09 C 1/64<br>C 09 C 1/62<br>C 09 C 3/06<br>C 23 F 7/00<br>B 22 F 1/00<br>B 22 F 1/02<br>B 22 F 9/04 |

The present search report has been drawn up for all claims

| Place of search | Date of completion of the search | Examiner |
|---|---|---|
| THE HAGUE | 02-01-1984 | VAN BELLINGEN I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document